# FASCICULE DE BREVET EUROPEEN

(11) **EP 1 011 855 B1**
(45) Date de publication et mention de la délivrance du brevet: **17.12.2003**
(21) Numéro de dépôt: 98924358.9
(22) Date de dépôt: 24.04.1998
(51) Int. Cl.: B01F 9/10, B01F 9/00, B01F 3/12

(54) **MALAXEUR D'ALGINATE AMELIORE**
VERBESSERTER ALGINATMISCHER
IMPROVED ALGINATE MIXER

(30) Priorité: 14.04.1997 FR 9705091
(43) Date de publication de la demande: 28.06.2000
(73) Titulaire: Jouvin, Jean-Luc, F-72000 Le Mans (FR)
(72) Inventeur: Jouvin, Jean-Luc, F-72000 Le Mans (FR)
(74) Mandataire: Breese, Pierre
(86) Numéro de dépôt international: FR9800833
(87) Numéro de publication internationale: WO98047607

(56) Documents cités:
- DE-A- 19 511 245
- DE-U- 7 213 810
- GB-A- 1 282 956
- GB-A- 1 367 354
- US-A- 3 778 033

## Description

La présente invention concerne le domaine de la préparation d'alginate par malaxage. L'alginate est un produit utilisé en dentisterie. Ce produit se présente sous la forme d'une poudre à laquelle il convient d'ajouter une quantité définie d'eau pour obtenir une consistance pâteuse. Avant l'utilisation, le dentiste procède à la préparation de la quantité nécessaire dans un malaxeur homogénéisant la préparation. On connaît dans l'état de la technique le brevet français déposé sous le n° FR 2 718 058. Ce brevet décrit un malaxeur prévoyant l'injection d'eau dans les bols par des buses.

Il est apparu que la présence d'eau mouillant le fond du bol garantit un malaxage de très bonne qualité, sans avoir recours aux prémalaxages. Le temps de malaxage est diminué de manière très significative, et il est possible de malaxer jusqu'à 4 doses par bol, sans risque d'avoir à la fin de la poudre tassée au fond du bol.

L'objet de la présente invention est d'améliorer les malaxeurs selon l'état de la technique.

A cet effet, l'invention concerne tout d'abord un malaxeur selon la revendication 1. Ce malaxeur comporte des moyens pour l'injection d'eau dans les bols par une ou plusieurs buses, de préférence 4. Dans les cas où les bols sont dépourvus de partie centrale, il en faut au moins une supplémentaire pour mouiller le milieu du bol.

Selon un mode de réalisation avantageux, les buses sont constituées par des tubes en acier inoxydable d'une longueur d'environ 20 mm et d'un diamètre de l'ordre de 1,3 mm.

Selon un mode de réalisation préféré, les buses sont alimentées par l'intermédiaire d'un détendeur régulant la pression.

Avantageusement, la pression des jets d'eau est comprise entre 2 et 4 bars.

Selon un mode de réalisation particulier, le malaxeur comporte un calculateur pour définir la quantité d'eau injectée en fonction du nombre de doses d'alginate introduites dans le bol.

L'invention sera mieux comprise à la lecture de la description qui suit, faisant référence aux dessins annexés correspondant à un exemple non limitatif de réalisation où **:**
- la figure 1 représente une vue en perspective du bol **;**
- la figure 2 représente une vue de dessus du bol malaxeur.

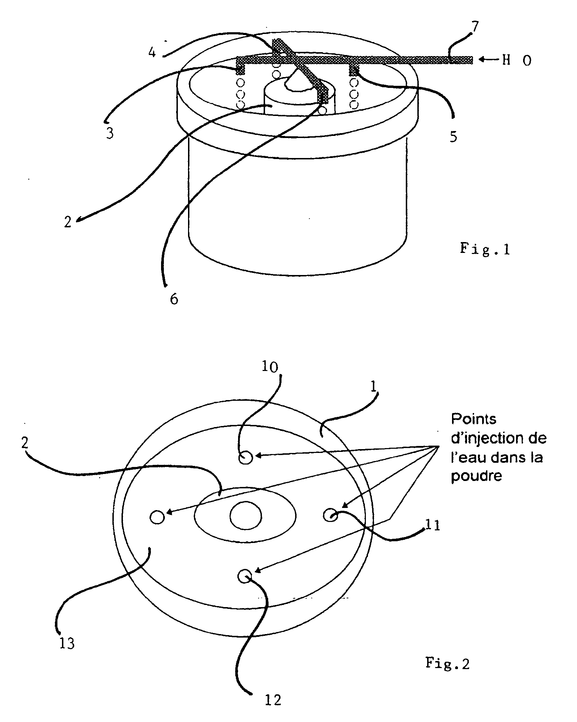

La figure 1 représente une vue en perspective d'un type de bol (1) avec un moyeu central (2). Le malaxeur comporte 4 buses (3 à 6) alimentées par un conduit commun (7). Les buses (3 à 6) sont diamétralement opposées, et distantes de 50 mm environ, suivant le grand axe de l'ellipse, et de 36 mm environ, suivant leur petit axe, de manière que les jets puissent traverser la poudre et mouiller le fond du bol en quatre points équidistants, et situés à la même distance des bords internes et externes.

Les buses (3 à 6) sont réalisées avec des petits tubes acier inoxydable de longueur variable, mais de préférence environ 20 mm. Leur diamètre intérieur est également variable, mais le diamètre de 13/10 mm donne d'excellents résultats.

La pression de l'eau doit se situer entre 0 et 8 bars, de préférence entre 2 et 4 bars, de manière à pouvoir traverser la poudre, et atteindre le fond du bol. En effet, la rapidité et la qualité du malaxage dépendent essentiellement du mouillage du fond du bol.

La stabilité de l'injection est garantie par un détendeur réglé entre 0 et 8 bars, de préférence 2 et 4 bars. L'injection d'eau doit être réalisée de manière continue ; les pompes donnant un flux intermittent ne conviennent pas même lorsque l'on en place deux en opposition de phase, car on a toujours un phénomène d'éclaboussures lié au flux saccadé, qui projette de la poudre dans l'air, et souille la machine et plus particulièrement les buses qui se bouchent.

La quantité d'eau injectée dans chaque bol est fonction du choix préalable du nombre de doses, elle est mémorisée par le microprocesseur qui resservira lors du prochain essai le même nombre de doses, sauf choix contraire. Un étalonnage sera réalisé lors de l'implantation de la machine sur un site donné.

Le logiciel embarqué prévoit une correction possible du nombre de ml par dose en plus ou en moins, correction ponctuelle, pour une utilisation particulière, ou mémorisable.

La figure 2 représente une vue de dessus du bol (1) après injection de l'eau. La surface de la poudre présente des points d'injection (10 à 13).

Une autre variante de malaxeur est constituée d'un système d'étalonnage géré par le microprocesseur, basé sur le contrôle du temps d'injection, de manière à s'adapter aux réseaux de distribution d'eau, y compris les systèmes autonomes sous pression.

L'invention est décrite dans ce qui précède à titre d'exemple non limitatif. Il est bien entendu que l'homme du métier sera à même de réaliser différentes variantes de réalisation sans pour autant sortir du cadre de l'invention.

## Revendications

1. Procédé pour la préparation d'alginate présentant une consistance pâteuse à partir d'alginate en poudre introduit dans un bol (1), ledit procédé comportant une étape d'injection préalable d'eau dans le fond dudit bol (1) contenant la poudre d'alginate à l'aide d'au moins quatre buses (3 à 6) réparties au-dessus de l'ouverture dudit bol (1) et une étape de malaxage par rotation dudit bol (1), **caractérisé en ce que** l'injection de l'eau est opérée de manière continue grâce à un détendeur.

2. Procédé pour la préparation d'alginate selon la revendication 1, **caractérisé en ce que** lesdites buses (3 à 6) sont opposées deux à deux par rapport à l'axe du bol (1).

3. Procédé pour la préparation d'alginate selon la revendication 1 ou la revendication 2, **caractérisé en ce que**, ledit bol (1) ne comportant pas de partie centrale, l'eau est injectée de manière continue au milieu du fond dudit bol (1) à l'aide d'une cinquième buse.

4. Procédé pour la préparation d'alginate selon l'une quelconque des revendications 1 à 3, **caractérisé en ce que** l'on calcule la quantité d'eau injectée en fonction du nombre de doses d'alginate introduites dans le bol (1) à l'aide d'un calculateur.

5. Procédé pour la préparation d'alginate selon l'une quelconque des revendications 1 à 4, **caractérisé en ce que** l'on-contrôle le temps d'injection à l'aide d'un système d'étalonnage géré par un microprocesseur, de manière à s'adapter aux réseaux de distribution d'eau, y compris les systèmes autonomes sous pression.

6. Procédé pour la préparation d'alginate selon l'une quelconque des revendications 1 à 5,
**caractérisé en ce que** la pression des jets d'eau est comprise entre 2 et 4 bars.

7. Malaxeur pour la mise en oeuvre du procédé selon l'une quelconque des revendications 1 à 6, ledit malaxeur comportant au moins un bol (1) apte à être entraîné en rotation, ainsi qu'au moins quatre buses (3 à 6) réparties au-dessus de l'ouverture dudit bol (1) pour injecter de l'eau dans le fond dudit bol (1), **caractérisé en ce qu'**il comporte en outre un détendeur pour injecter de l'eau de manière continue.

8. Malaxeur selon la revendication 7 **caractérisé en ce que** lesdites buses sont opposées deux à deux par rapport à l'axe du bol (1).

9. Malaxeur selon la revendication 7 ou la revendication 8, **caractérisé en ce que** le bol (1) ne comporte de partie centrale et **en ce que** ledit malaxeur comporte une cinquième buse au milieu des quatre autres buses (3 à 6).

10. Malaxeur selon l'une quelconque des revendications 7 à 9, **caractérisé en ce que** les buses sont constituées par des tubes en acier inoxydable d'une longueur d'environ 20 mm et d'un diamètre de l'ordre de 1,3 mm.

## Patentansprüche

1. Verfahren für die Präparation von Alginat, das eine pastöse Konsistenz aufweist, wobei die Präparation mit Hilfe von pulverförmigem in ein Schälchen (1) gefülltem Alginat erfolgt und wobei das oben genannte Verfahren eine vorangehende Etappe der Einspritzung von Wasser auf den Boden des oben genannten Schälchens (1) umfasst, in dem sich das Alginatpulver befindet, wobei diese Einspritzung mit Hilfe von mindestens vier Düsen (3 bis 6) erfolgt, die über der Öffnung des oben genannten Schälchens (1) verteilt sind, und wobei das oben genannte Verfahren auch eine Etappe der Mischung durch Drehen des oben genannten Schälchens (1) umfasst, **dadurch gekennzeichnet, dass** die Einspritzung des Wassers mit Hilfe eines Druckminderers auf kontinuierliche Weise ausgeführt wird.

2. Verfahren für die Präparation von Alginat nach Anspruch 1, **dadurch gekennzeichnet, dass** sich die oben genannten Düsen (3 bis 6) jeweils zu zweit im Verhältnis zur Achse vom Schälchen (1) gegenüber liegen.

3. Verfahren für die Präparation von Alginat nach Anspruch 1 oder 2, **dadurch gekennzeichnet, dass** das oben genannte Schälchen (1) keinen zentralen Teil aufweist und dass somit das auf kontinuierliche Weise auf den Boden des oben genannten Schälchens (1) eingespritzte Wasser mit Hilfe einer fünften Düse eingespritzt wird.

4. Verfahren für die Präparation von Alginat nach einem der Ansprüche 1 bis 3, **dadurch gekennzeichnet, dass** die Menge des eingespritzten Wassers im Verhältnis zur Anzahl der Alginatdosen berechnet wird, die in das Schälchen (1) gegeben werden, wobei die Berechnungen von einem Rechner ausgeführt werden.

5. Verfahren für die Präparation von Alginat nach einem der Ansprüche 1 bis 4, **dadurch gekennzeichnet, dass** die Zeit der Einspritzung mit Hilfe von einem Eichungssystem kontrolliert wird, wobei besagtes Eichungssystem durch einen Mikroprozessor verwaltet wird und wobei dies so ausgeführt wird, dass es sich den Wasserversorgungsnetzen anpasst, wobei dies ebenfalls für die autonomen unter Druck stehenden Systeme gilt.

6. Verfahren für die Präparation von Alginat nach einem der Ansprüche 1 bis 5, **dadurch gekennzeichnet, dass** der Druck der Wasserstrahle zwischen 2 und 4 bar liegt.

7. Mischer für die Einsetzung des Verfahrens nach einem der Ansprüche 1 bis 6, wobei der oben genannte Mischer mindestens ein Schälchen (1) aufweist, das durch Rotation angetrieben werden kann, und der weiterhin mindestens vier Düsen (3 bis 6) aufweist, die über der Öffnung des oben genannten Schälchens (1) verteilt sind, um Wasser in den Boden des oben genannten Schälchens (1) zu spritzen, **dadurch gekennzeichnet, dass** er weiterhin einen Druckminderer aufweist, um auf kontinuierliche Weise das Wasser einzuspritzen.

8. Mischer nach Anspruch 7, **dadurch gekennzeichnet, dass** sich die oben genannten Düsen jeweils zu zweit im Verhältnis zur Achse vom Schälchen (1) gegenüber liegen.

9. Mischer nach Anspruch 7 oder 8, **dadurch gekennzeichnet, dass** das Schälchen (1) keinen zentralen Teil aufweist und dass der oben genannte Mischer eine fünfte Düse in der Mitte von den anderen vier Düsen (3 bis 6) aufweist.

10. Mischer nach einem der Ansprüche 7 bis 9, **dadurch gekennzeichnet, dass** die Düsen aus rostfreien Stahlrohren bestehen, wobei diese Stahlrohre etwa 20 mm lang sind und über einen Durchmesser von etwa 1,3 mm verfügen.

## Claims

1. Method for the preparation of alginate with a paste-like consistency, starting from powdered alginate introduced into a bowl (1), said method including a preliminary water injection stage into the bottom of said bowl (1) containing the alginate powder, with the aid of at least four nozzles (3 to 6) arranged above the mouth of said bowl (1) and a mixing stage by rotation of said bowl (1), **characterised in that** the injection of the water is carried out in a continuous manner by means of a valve.

2. Method for the preparation of alginate according to claim 1, **characterised in that** said nozzles (3 to 6) are arranged two by two opposite each other relative to the axis of the bowl (1).

3. Method for the preparation of alginate according to one or the other of claims 1 or 2, **characterised in that** said bowl (1) not comprising a central part, the water is injected in a continuous manner into the middle of the bottom of said bowl (1) by means of a fifth nozzle.

4. Method for the preparation of alginate according to any one of claims 1 to 3, **characterised in that** the quantity of water injected is calculated in function of the number of measures of alginate introduced into the bowl (1), using a computer.

5. Method for the preparation of alginate according to any one of claims 1 to 4, **characterised in that** the time of injection is controlled with the aid of a calibration system managed by a microprocessor, in such a way as to be adapted to the water distribution networks, including the autonomous systems under pressure.

6. Method for the preparation of alginate according to any one of claims 1 to 5, **characterised in that** the pressure of the water jets is between 2 and 4 bars.

7. Mixer for operating the method according to any one of claims 1 to 6, said mixer comprising at least one bowl (1) able to be rotated, and also at least four nozzles (3 to 6) arranged above the mouth of said bowl (1) for injecting water into the bottom of said bowl (1), **characterised in that** it further includes a valve for injecting water in a continuous manner.

8. Mixer according to claim 7, **characterised in that** said nozzles are opposite each other two by two relative to the axis of the bowl (1).

9. Mixer according to one or the other of claims 7 and 8, **characterised in that** the bowl (1) does not comprise a central part and **in that** said mixer comprises a fifth nozzle at the middle of the four other nozzles (3 to 6).

10. Mixer according to any one of claims 7 to 9, **characterised in that** the nozzles are constituted by tubes in stainless steel of a length of about 20 mm and a diameter of the order of 1.3 mm.
